# EUROPÄISCHE PATENTSCHRIFT

(11) **EP 1 106 419 B1**
(45) Veröffentlichungstag und Bekanntmachung des Hinweises auf die Patenterteilung: **07.03.2007**
(21) Anmeldenummer: 00125971.2
(22) Anmeldetag: 28.11.2000
(51) Int. Cl.: B60K 37/06

(54) **Bediengerät mit beleuchtbaren Bedienelementen**
Control apparatus with illuminated control elements
Appareil de commande à éléments de commande lumineux

(30) Priorität: 06.12.1999 DE 19958725
(43) Veröffentlichungstag der Anmeldung: 13.06.2001
(60) Teilanmeldung: 06016430.8
(73) Patentinhaber: SIEMENS AKTIENGESELLSCHAFT, 80333 München (DE)
(72) Erfinder: Lange, Michael, 65205 Wiesbaden (DE)

(56) Entgegenhaltungen:
- EP-A- 0 505 690
- DE-A- 1 815 910
- DE-A- 19 722 369
- US-A- 4 800 466
- US-A- 4 930 048

## Beschreibung

Die Erfindung betrifft ein Bediengerät eines Kraftfahrzeuges mit mehreren in einer sichtbaren Oberfläche des Bediengeräts angeordneten Bedienelementen, die von einer Lichtquelle über Lichtauskoppelflächen eines Lichtleiters beleuchtbar sind.

Bediengeräte eines Kraftfahrzeuges, wie bspw. solche für eine Klimaanlage oder ein Navigationssystem, weisen mehrere Bedienelemente auf. Um auch bei Nacht eine sichere Bedienung der Bediengeräte zu gewährleisten, müssen die Bedienelemente auch in der Dunkelheit sicher erkennbar sein. Eine optische Kennzeichnung der Bedienelemente kann bspw. dadurch erfolgen, dass das Bedienelemente selbst eine Leuchtmarkierung enthält oder auch ein Leuchtring um das Bedienelement herum angeordnet ist. Da der Platz hinter dem Bedienelement im Bediengerät in der Regel durch die durch das Bedienelement betätigte Komponente belegt ist, wie bspw. ein Potentiometer, werden häufig Lichtleiter eingesetzt, die das Licht einer Lichtquelle an die gewünschte Stelle im Bediengerät führen. Gleichzeitig ist zudem eine gleichmäßige Ausleuchtung sicherzustellen.

Als Lichtquellen werden in der Regel mehrere Leuchtdioden eingesetzt, die auf einer Leiterplatte im Bediengerät angeordnet sind und deren Lichtabstrahlung senkrecht zur Leiterplattenebene erfolgt. Die Abstrahlung der Leuchtdioden erfolgt dabei zwar grundsätzlich in Richtung der sichtbaren Bedienoberfläche des Bediengerätes, jedoch können die Leuchtdioden aus den vorgenannten Gründen nicht direkt hinter dem zu beleuchtendem Element angeordnet werden. Zudem würde eine solche direkte Anordnung der Leuchtdioden bspw. bei der Beleuchtung eines Bedienelementes über Leuchtringe auch zu einer ungleichmäßigen Lichtverteilung führen. Auch aus diesem Grund wird das von den Leuchtdioden ausgesandte Licht in einen Lichtleiter eingekoppelt und über diesen an die gewünschte Stelle geführt. Um hierbei den Lichtverlust gering zu halten, müssen ausreichend große Radien des Lichtleiters zur Lichtumlenkung eingehalten werden. Dadurch ergeben sich entsprechend große Einbautiefen des Bediengerätes.

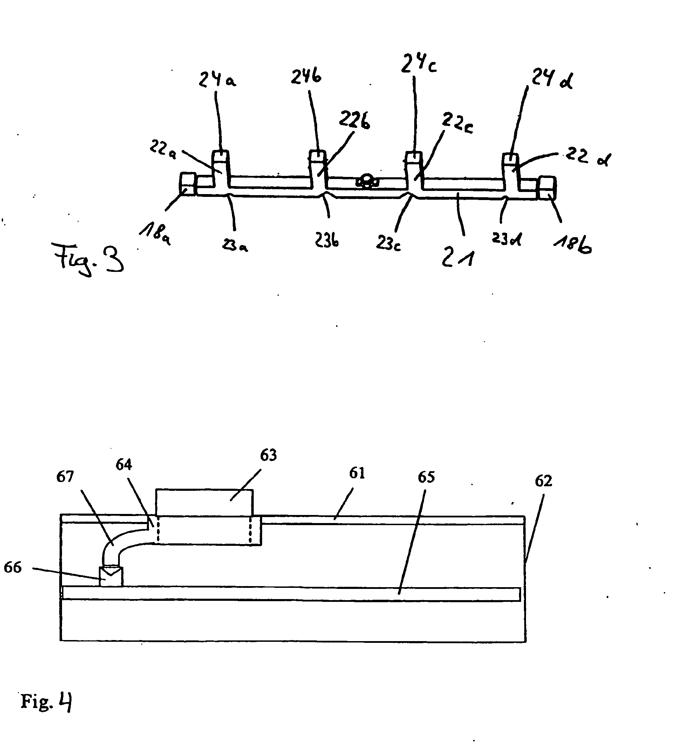

In Figur 4 ist eine solche bekannte Anordnung nach dem Stand der Technik dargestellt. In einer sichtbaren Front 61 eines Gehäuses 62 ist ein Bedienelement 63 angeordnet. Das Bedienelement 63 ist von einem Leuchtring umgeben, der durch das Lichtleitelement 64 gebildet wird. In dem Gehäuse 62 ist weiterhin eine Leiterplatte 65 angeordnet, auf die eine Leuchtdiode 66 aufgebracht ist. Die Leuchtdiode 66 strahlt Licht in Richtung der Front 61 ab. Sie ist jedoch aufgrund der Einbauverhältnisse seitlich versetzt zu dem Bedienelement 63 auf der Leiterplatte 65 angeordnet. Die Lichteinkopplung in das Lichtleitelement 64 erfolgt über ein Bogensegment 67. Dieser Aufbau hat eine relativ große Bautiefe des Bediengeräts zur Folge.

Eine ähnliche Anordnung mit einer seitlich angeformten Lichtleitzunge ist aus der EP 0 505 690 bekannt.

Aus der EP 0 498 451 A1 ist ein beleuchtbares Anzeigeinstrument eines Kraftfahrzeuges bekannt. Zur Beleuchtung des Anzeigeinstrumentes ist dort ein nicht vollständig geschlossener Kreisring vorgesehen, in dessen fehlendem Teil die Lichtquelle angeordnet ist. Aufgrund der unterschiedlichen Einbaubedingungen bei einem relativ großen Anzeigeinstrument im Vergleich zu einem relativ kleinen Bedienelement, kann diese Lösung nicht ohne weiteres auf Bedienelemente übertragen werden. Dies gilt insbesondere deshalb, weil der Einbauraum unmittelbar hinter dem Bedienelement nicht immer zur Anbringung der Lichtquelle zur Verfügung steht.

Des Weiteren ist aus dem gattungsgemäßen Dokument US 4,800,466 ein Lichtleitkörper mit mehreren fingerartigen Fortsätzen bekannt.

Aufgabe der Erfindung ist es daher, ein Bediengerät eines Kraftfahrzeuges mit beleuchtbaren Bedienelementen anzugeben, das eine geringe Einbautiefe aufweist und gleichzeitig eine homogene Lichtverteilung gewährleistet, wobei insbesondere so genannte "hot spots", d. h. Punkte hoher Leuchtdichte, vermieden werden.

Die Aufgabe wird bei einem gattungsgemäßen Bediengerät durch die kennzeichnenden Merkmale des Anspruchs 1 gelöst.

Es ist vorgesehen, dass über einen Lichtleiter mehrere Bedienelemente beleuchtbar sind. Der Lichtleiter weist dabei mehrere in der gleichen Ebene angeordnete Lichtauskoppelflächen auf, die an fingerartigen Fortsetzungen eines ansonsten flächigen Lichtleiters angeordnet sind. Die Lichtauskoppelflächen sind dabei rechtwinklig zu einer gemeinsamen Lichteinkoppelfläche angeordnet. Weiterhin weist der Lichtleiter an einer den Lichtauskoppelflächen gegenüberliegenden Fläche Mittel zur Lichtumlenkung auf. Mit einem solchen Lichtleiter lässt sich eine sehr geringe Einbautiefe erzielen. Insbesondere wird eine Lichtquelle mit einer einzigen, gerichteten Lichtauskoppelfläche verwendet, um den Streulichtanteil möglichst gering zu halten. Insbesondere kann es sich deshalb um eine Leuchtdiode als Lichtquelle handeln. Um eine Leiterplatte in gewohnter Weise parallel zur Front des Bediengerätes anordnen zu können, wobei auf der Leiterplatte die Lichtquelle angeordnet ist, ist insbesondere vorgesehen, dass die einzige Lichtaustrittsfläche der Lichtquelle senkrecht zu einer Fläche der Lichtquelle mit elektrischen Kontakten angeordnet ist, die die Verbindung zur Leiterplatte herstellen.

Weitere vorteilhafte Ausgestaltungen sind in den abhängigen Ansprüchen angegeben.

Die Erfindung wird nachfolgend anhand von Ausführungsbeispielen und der Zeichnung näher erläutert. Es zeigen:
- Figur 1: eine Frontansicht eines Bediengerätes,
- Figur 2: ein Schnittbild durch ein Bediengerät mit mehreren beleuchteten Tasten,
- Figur 3: ein Lichtleitelement zur Beleuchtung mehrerer Bedienelemente,
- Figur 4: einen Schnitt durch ein Bediengerät nach dem Stand der Technik.

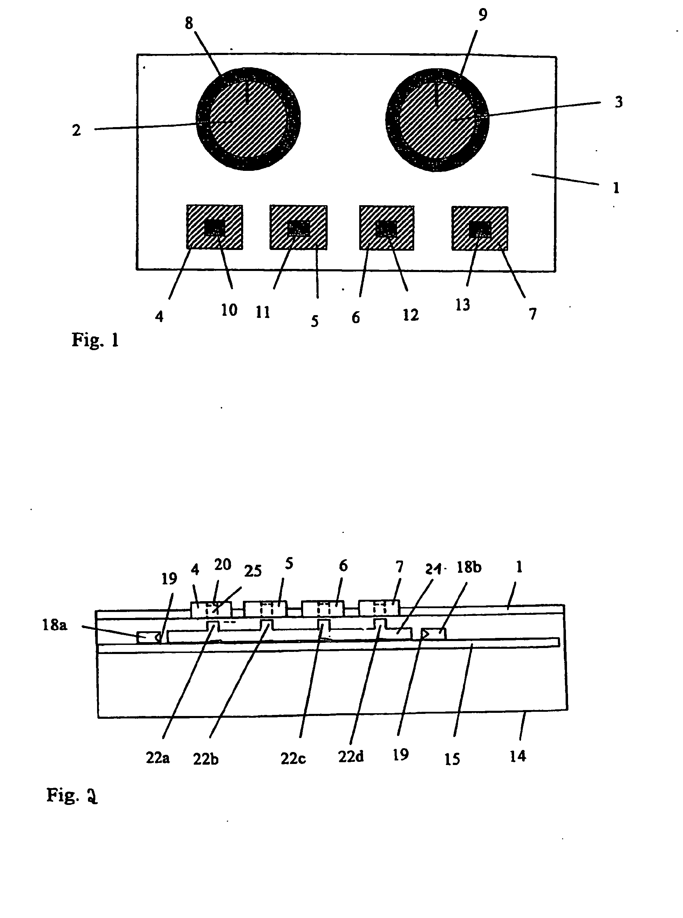

Figur 1 zeigt die im Fahrzeug sichtbare Front 1 eines Bediengerätes. In der Front 1 des Bediengerätes sind drehbare Bedienelemente 2, 3 sowie Tasten 4 - 7 angeordnet. Die drehbaren Bedienelemente 2, 3 sind von Leuchtflächen 8, 9 umgeben, die eine Erkennbarkeit der Bedienelemente 2, 3 auch bei Dunkelheit sicherstellen. Bei den Tasten 4 - 7 sind Leuchtmarkierungen 10 - 13 in der Taste selbst angeordnet.

In Figur 2 ist ein vereinfachter Schnitt durch ein Bediengerät dargestellt. Das Bediengerät weist ein Gehäuse 14 auf, das zum Fahrzeuginnenraum hin durch die Front 1 begrenzt wird. In der Front 1 sind mehrere Tasten 4 - 7 angeordnet. Die Tasten weisen wie am Beispiel der Taste 4 erläutert wird, jeweils eine zentrale Aussparung 19 auf, die durch eine durchscheinende Abdeckung 20 zum Fahrgastraum hin abgeschlossen ist. In dem Bediengerät ist eine Leiterplatte 15 parallel zur Front 1 des Gehäuses 14 angeordnet. Die Beleuchtung der Tasten 4 - 7 erfolgt über einen gemeinsamen Lichtleiter 21, in den das Licht zweier Leuchtdioden 18 eingekoppelt wird. Die Leuchtdioden 18 sind auf der Leiterplatte 15 befestigt, wobei die Lichtaustrittsfläche 19 senkrecht zur Leiterplatte 15 angeordnet ist. Die elektrischen Kontaktelemente der Leuchtdioden 18 sind ebenfalls in einer Ebene senkrecht zur Lichtaustrittsfläche 19 angeordnet. Der Lichtleiter 21 ist als flächiger Lichtleiter mit fingerartigen Fortsetzungen 22 ausgestaltet. Die fingerartigen Fortsetzungen 22 weisen die Lichtauskoppelflächen auf, die senkrecht zu den Lichteinkoppelflächen angeordnet sind. Wie aus der Figur 2 hervorgeht wird die Einbautiefe durch die Anordnung der Lichtquelle im Bezug zum Lichtleiter nicht über die Einbautiefe des Lichtleiters hinaus vergrößert. Abweichend von der Darstellung des Ausführungsbeispiels können die fingerartigen Fortsetzungen 22 insbesondere bis in die jeweilige zentrale Aussparung 21 hineinreichen.

Der Lichtleiter 21 ist in Figur 3 näher gezeigt. Dargestellt ist ferner die Anordnung zweier Leuchtdioden 18a und 18b. Der Lichtleiter 21 weist fingerartige Fortsetzungen 22a - 22d sowie Reflexionsflächen 23a - 23d auf, die für eine Lichtumlenkung zu den Lichtauskoppelflächen 24a - 24d sorgen. Die Lichtumlenkflächen 23 werden beispielsweise durch Auskerbungen im Lichtleiter 21 gebildet. Im dargestellten Beispiel wird das Licht der Leuchtdiode 18a zu den Lichtauskoppelflächen 24a und 24b geleitet, während das Licht von der Leuchtdiode 18b zu den Lichtauskoppelflächen 24b und 24c geleitet wird. Um eine gleichmäßige Leuchtdichte an den verschiedenen Lichtauskoppelflächen zu erzielen, werden die Reflexionsflächen mit zunehmenden Abstand von der entsprechenden Leuchtdiode größer gestaltet. Auch bei dieser gezeigten Ausführungsform wird die Einbautiefe durch die Anordnung der Leuchtdioden 18 im Bezug zum Lichtleiter 21 nicht weiter erhöht.

## Patentansprüche

1. Bediengerät eines Kraftfahrzeugs mit mehreren in einer sichtbaren Oberfläche des Bediengeräts angeordneten Bedienelementen (2-7), die von einer Lichtquelle (18) über Lichtauskoppelflächen (24a-24d) eines Lichtleiters beleuchtbar sind, **dadurch gekennzeichnet, dass** der Lichtleiter (21) mehrere in der gleichen Ebene angeordnete Lichtauskoppelflächen (24) an fingerartigen Fortsetzungen (22) eines ansonsten flächigen Lichtleiters aufweist, wobei die Lichtauskoppelflächen (24) rechtwinklig zu einer gemeinsamen Lichteinkoppelfläche angeordnet sind, und dass der Lichtleiter (21) an einer den Lichtauskoppelflächen gegenüberliegenden Fläche Mittel zur Lichtumlenkung (Reflexionsfläche 23) aufweist.

2. Bediengerät nach Anspruch 1, **dadurch gekennzeichnet, dass** die Lichtquelle eine einzige Lichtauskoppelfläche (19) aufweist.

3. Bediengerät nach Anspruch 2, **dadurch gekennzeichnet, dass** es sich bei der Lichtquelle um eine Leuchtdiode (18) handelt.

4. Bediengerät nach einem der vorhergehenden Ansprüche 1 bis 3, **dadurch gekennzeichnet, dass** die Lichtquelle auf einer Leiterplatte (15) befestigt ist und die Leiterplatte (15) in einer zu den Lichtaustrittsflächen (24) des Lichtleiters (21) parallelen Ebene angeordnet ist.

5. Bediengerät nach einem der vorhergehenden Ansprüche 2 bis 4, **dadurch gekennzeichnet, dass** die einzige Lichtaustrittsfläche (19) der Lichtquelle senkrecht zu einer Fläche der Lichtquelle mit elektrischen Kontaktelementen angeordnet ist, die die Verbindung zur Leiterplatte (15) herstellen.

## Claims

1. Control unit of a motor vehicle having a plurality of control elements (2-7) arranged in a visible surface of the control unit, which elements can be illuminated by a light source (18) via light coupling-out areas (24a - 24d) of an optical waveguide, **characterized in that** the optical waveguide (21) has a plurality of light coupling-out areas (24) arranged in the same plane on finger-like extensions (22) of an otherwise planar optical waveguide, the light coupling-out areas (24) being arranged at right angles to a common light coupling-in area, and **in that** the optical waveguide (21) has means for light deflection (reflecting area 23) on an area opposite to the light coupling-out areas.

2. Control unit according to claim 1, **characterized in that** the light source has a single light coupling-out area (19).

3. Control unit according to claim 3, **characterized in that** the light source is a light-emitting diode (18).

4. Control unit according to one of the preceding claims 1-3, **characterized in that** the light source is fixed on a printed circuit board (15) and the printed circuit board (15) is arranged in a plane parallel to the light exit areas (24) of the optical waveguide (21).

5. Control unit according to one of the preceding claims 2 to 4, wherein the single light exit area (19) of the light source is arranged perpendicularly to an area of the light source with electrical contact elements which establish the connection to the printed circuit board (15).

## Revendications

1. Appareil de commande d'un véhicule automobile comportant plusieurs éléments de commande (2 - 7) disposés dans une surface visible de l'appareil de commande et qui peuvent être éclairés par une source de lumière (18) par l'intermédiaire de surfaces (24a - 24d) de découplage de la lumière d'un guide d'ondes optiques, **caractérisé par le fait que** le guide d'ondes optiques (21) comporte, sur des prolongements (22) ressemblant à des doigts d'un guide d'ondes optiques qui est, pour le reste, en nappe, plusieurs surfaces (24) de découplage de la lumière, disposées dans un même plan, les surfaces (24) de découplage de la lumière étant disposées à angle droit par rapport à une surface commune de couplage de la lumière, et que le guide d'ondes optiques (21) comporte, sur une surface faisant face aux surfaces de découplage de la lumière, des moyens permettant de changer l'orientation de la lumière (surfaces de réflexion 23).

2. Appareil de commande selon la revendication 1, **caractérisé par le fait que** la source lumineuse comporte une seule surface (19) de découplage de la lumière.

3. Appareil de commande selon la revendication 2, **caractérisé par le fait que** la source lumineuse est une diode électroluminescente (18).

4. Appareil de commande selon l'une des revendications précédentes 1 à 3, **caractérisé par le fait que** la source lumineuse est fixée sur une carte à circuits imprimés (15) et que la carte à circuits imprimés (15) est placée dans un plan parallèle aux surfaces (24) de découplage de la lumière du guide d'ondes optiques (21).

5. Appareil de commande selon l'une des revendications précédentes 2 à 4, **caractérisé par le fait que** la seule surface (19) de découplage de la lumière est placée perpendiculairement à une surface de la source lumineuse portant des éléments de contact électrique, qui établissent la liaison électrique vers la carte à circuits imprimés (15).
